# EUROPEAN PATENT SPECIFICATION

(11) **EP 1 108 467 B1**
(45) Date of publication and mention of the grant of the patent: **14.07.2010**
(21) Application number: 00310909.7
(22) Date of filing: 08.12.2000
(51) Int. Cl.: B01J 19/00

(54) **Combinatorial catalytic reactor**
Kombinatorischer katalytischer Reaktor
Réacteur combinatoire catalytique

(30) Priority: 15.12.1999 US 464171; 15.12.1999 US 465213
(43) Date of publication of application: 20.06.2001
(73) Proprietor: UOP LLC, Des Plaines, IL 60017-5017 (US)
(72) Inventor: Dahl, Ivar M., 0314 Oslo (NO); Karlsson, Arne, 0314 Oslo (NO); Akporiaye, Duncan E., 0314 Oslo (NO); Vanden Bussche, Kurt M, Des Plaines, Illinois 60017 (US); Towler, Gavin P., Des Plaines, Illinois 60017 (US); Wendelbo, Rune, 0314 Oslo (NO)
(74) Representative: Chung, Hsu Min

(56) References cited:
- WO-A2-01/44801
- US-A- 5 766 556

## Description

### BACKGROUND OF THE INVENTION

Developments in combinatorial chemistry have largely concentrated on the synthesis of chemical compounds. For example, US-A-5612002 and US-A-5766556 disclose a method and apparatus for multiple simultaneous synthesis of compounds. WO 97/30784-A1 discloses a microreactor for the synthesis of chemical compounds. Akporiaye, D. E.; Dahl, I. M.; Karlsson, A.; Wendelbo, R. Angew Chem. Int. Ed. 1998, 37, 609-611 disclose a combinatorial approach to the hydrothermal synthesis of zeolites, see also WO 98/36826-A1. Other examples include US-A-5609826, US-A-5792431, US-A-5746982, and US-A-5785927, and WO 96/11878-A1.

More recently, combinatorial approaches have been applied to catalyst testing to try to expedite the testing process. For example, WO 97/32208-A1 teaches placing different catalysts in a multicell holder. The reaction occurring in each cell of the holder is measured to determine the activity of the catalysts by observing the heat liberated or absorbed by the respective formulation during the course of the reaction and/or analyzing the products or reactants. Thermal imaging had been used as part of other combinatorial approaches to catalyst testing, see Holzwarth, A.; Schmodt, H.; Maier, W. F. Angew. Chem. Int. Ed., 1998, 37, 2644-2647, and Bein, T. Angew. Chem. Int. Ed., 1999, 38, 323-326. Thermal imaging may be a tool to learn some semi-quantitative information regarding the activity of the catalyst, but it provides no indication as to the selectivity of the catalyst.

Some attempts to acquire information as to the reaction products in rapid-throughput catalyst testing are described in Senkam, S. M. Nature, July 1998, 394 (23), 350-353, where laser-induced resonance-enhanced multiphoton ionization is used to analyze a gas flow from each of the fixed catalyst sites. Similarly, Cong, P.; Doolen, R. D.; Fan, Q.; Giaquinta, D. M.; Guan, S.; McFarland, E. W.; Poojary, D. M.; Self, K.; Turner, H. W.; Weinberg, W. H. Angew Chem. Int. Ed. 1999, 38, 484-488 teaches using a probe with concentric tubing for gas delivery/removal and sampling. Only the fixed bed of catalyst being tested is exposed to the reactant stream, with the excess reactants being removed via vacuum. The single fixed bed of catalyst being tested is heated and the gas mixture directly above the catalyst is sampled and sent to a mass spectrometer.

Combinatorial chemistry has been applied to evaluate the activity of catalysts. Some applications have focused on determining the relative activity of catalysts in a library; see Klien, J.; Lehmann, C. W.; Schmidt, H.; Maier, W. F. Angew Chem. Int. Ed. 1998, 37, 3369-3372; Taylor, S. J.; Morken, J. P. Science, April 1998, 280(10), 267-270; and WO 99/34206-A1. Some applications have broadened the information sought to include the selectivity of catalysts. WO 99/19724-A1 discloses screening for activities and selectivities of catalyst libraries having addressable test sites by contacting potential catalysts at the test sites with reactant streams forming product plumes. The product plumes are screened by passing a radiation beam of an energy level to promote photoions and photoelectrons which are detected by microelectrode collection. WO 98/07026-A1 discloses miniaturized reactors where the reaction mixture is analyzed during the reaction time using spectroscopic analysis. Some commercial processes have operated using multiple parallel reactors where the products of all the reactors are combined into a single product stream; see US-A-5304354 and US-A-5489726. US 5,766,556 describes an apparatus and method which are used for the multiple, simultaneous synthesis of compounds.

Applicants have developed a reactor particularly suited for use in combinatorial evaluation of catalysts. Multiple reactors may be readily assembled in an array for the simultaneous evaluation of a number of catalysts. The wells of the multiple reactors may be integrated into a single block, and the reactor inserts of the multiple reactors may be integrated into a single top plate thereby allowing for easy handling and assembly of an array of multiple reactors.

### SUMMARY OF THE INVENTION

In the first aspect of the presentation there is provided a multiple parallel catalytic reactor assembly comprising:
a) a plurality of bottoms (2), each bottom having a closed end (4) and an open end (6), said plurality of bottoms supported by a single first support,
b) a plurality of tops (22) supported by a single second support, said plurality of tops (22) cooperating with said open ends (6) of the plurality of bottoms (2) to form a plurality of independent reaction chambers (38);
c) a plurality of vessels (14) for retaining catalyst, each vessel having a fluid permeable end (18) that restricts catalyst flow and an open end (16), with the fluid permeable end of each of said vessels adopted to extend into said independent reaction chambers (38) through said said open end (6) of said bottoms (2) and;
   wherein the fluid permeable ends contain a microporous containment device attached at or near the fluid permeable end of the vessel and extends across the cross-section of the sleeve;
d) a plurality of first fluid conduits (30) (32) in fluid communication with the plurality of reaction chambers (38); wherein each of said first fluid conduits is in fluid communication with a reactant reservoir;
e) a plurality of second fluid conduits (30) (32) in fluid communication with the plurality of reaction chambers (38) wherein each of said second fluid conduits is in fluid communication with a sampling device;
and wherein both the first and second fluid conduits are connected to the tops;
the apparatus further comprising a plurality of seals (10), each seal engaging a bottom (2) and a corresponding top (22) to form the sealed independent reaction chambers (38) and comprising one or more seals (28) engaging the vessels (14) and the corresponding tops (22) or bottoms (2);
and wherein each top is in the form of a reactor insert, each vessel is in sleeve form and the sleeve has a top end, a bottom end, and a cross-section; and each bottom is in the form of a well; and each reactor insert is inserted into a sleeve, which in turn is inserted into a well, and in the assembled reactor, the sleeve is positioned between the reactor insert and the well.

The purpose of the invention is to provide a multiple parallel catalytic reactor assembly having (1) a plurality of bottoms, each bottom having an open end and a closed end with the plurality being supported by a single first support; (2) a plurality of tops supported by a single second support with the plurality of tops engaged with the plurality of vessels to form a plurality of sealed independent reaction chambers; (3) a plurality of vessels for containing catalyst, each vessel having an open end and a fluid permeable end, and positioned within the reaction chambers so that the open ends of the vessels are in alignment with the open ends of the bottoms (4) a plurality of first fluid conduits in fluid communication with the reaction chambers, and (5) a plurality of second fluid conduits in fluid communication with the reaction chambers. A specific embodiment of the invention is one where one or more heaters are positioned adjacent the plurality of bottoms to heat the bottoms and the reaction chambers. One or more seals are used to engage the plurality of bottoms and the corresponding plurality of tops and optionally another seal or seals to engage the plurality of vessels and the plurality of tops to form the sealed reaction chambers.

Another purpose of the invention is to provide a process for conducting multiple parallel catalyst evaluations using the multiple parallel catalytic reactor assembly described above with the advantage of simultaneously sealing all the open ends of the plurality of bottoms with the plurality of corresponding tops to form the multiple sealed independent reaction chambers. A specific embodiment of the invention also includes simultaneously opening all the multiple sealed reaction chambers by removing the plurality of tops from the open ends of the plurality of bottoms. Another specific embodiment of the invention is one where the plurality of vessels containing catalyst are removed from the plurality of bottoms.

The multiple reactors may take on a variety of different forms. In one arrangement each reactor has a well having an open end and a closed end and a first seal retained by the open end of the well. The reactor also has a sleeve having an open end and a bottom end. The bottom end of the sleeve is inserted within the open end of the well. A fluid permeable structure is attached to the sleeve spanning the cross-section of the sleeve and thereby defining a chamber between the closed end of the well and the fluid permeable structure attached to the sleeve. The reactor also has a reactor insert having a fluid permeable end and a top end containing a first and a second fluid conduit. The fluid permeable end of the reactor is inserted within the open end of the sleeve. The top end of the reactor insert is engaged with the first seal. The first fluid conduit is in fluid communication with the chamber; and the second fluid conduit is in fluid communication with the fluid permeable end of the reactor insert. A second seal retained by the reactor insert is engaged with the sleeve.

The plurality of bottoms or tops respectively can be formed from a single unit of material.

The present invention also provides a process for conducting multiple parallel catalytic reactions using the apparatus described previously comprising:
a) sealing, simultaneously, the open ends (6) of the plurality of bottoms (2) with a plurality of corresponding tops (22) supported by a single second support to form multiple sealed independent reaction chambers each multiple sealed independent reaction chamber housing the vessel (14) containing catalyst;
b) introducing, simultaneously, a reaction fluid to each sealed independent reaction chamber to contact the catalysts contained therein and to form a plurality of reaction mixtures, one reaction mixture in each sealed independent reaction chamber; and
c) withdrawing, simultaneously, an effluent from each independent reaction chamber.

### BRIEF DESCRIPTION OF THE DRAWINGS

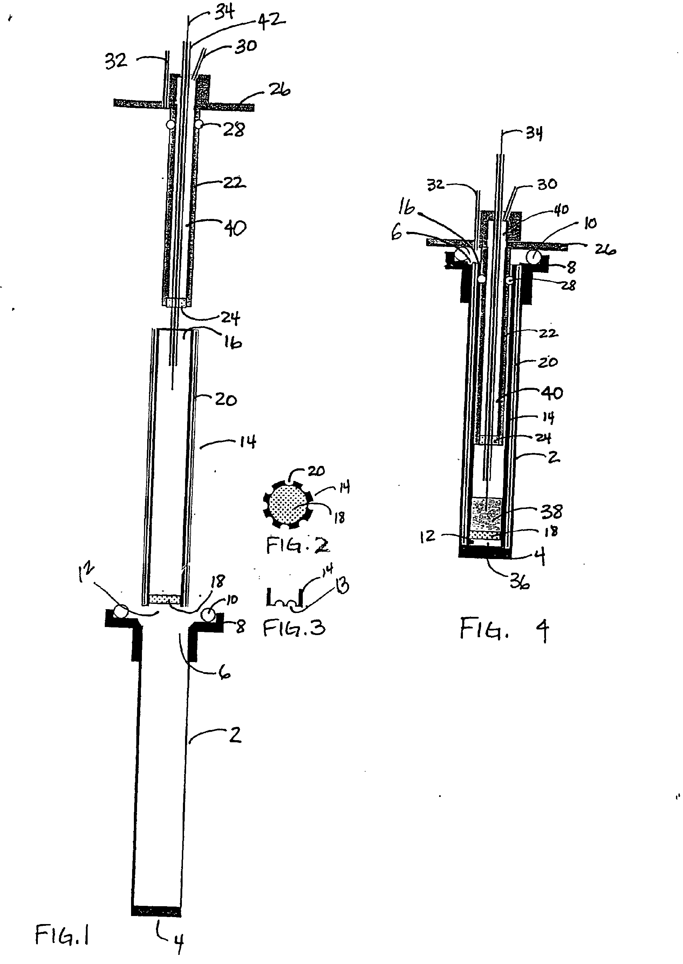

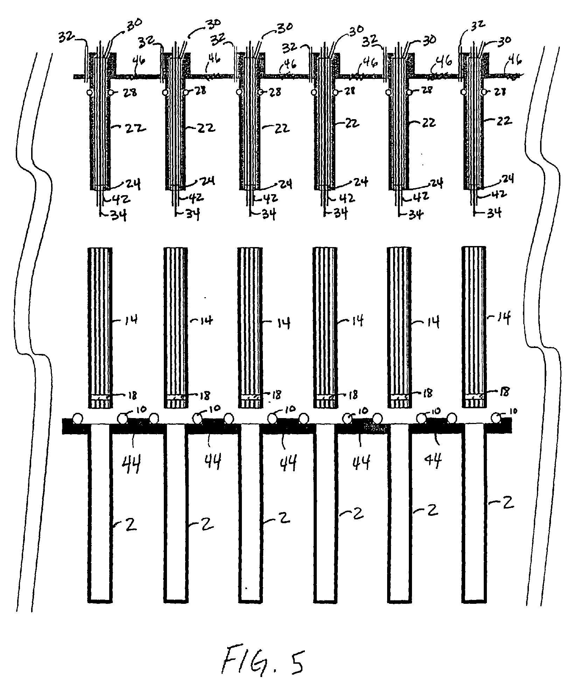

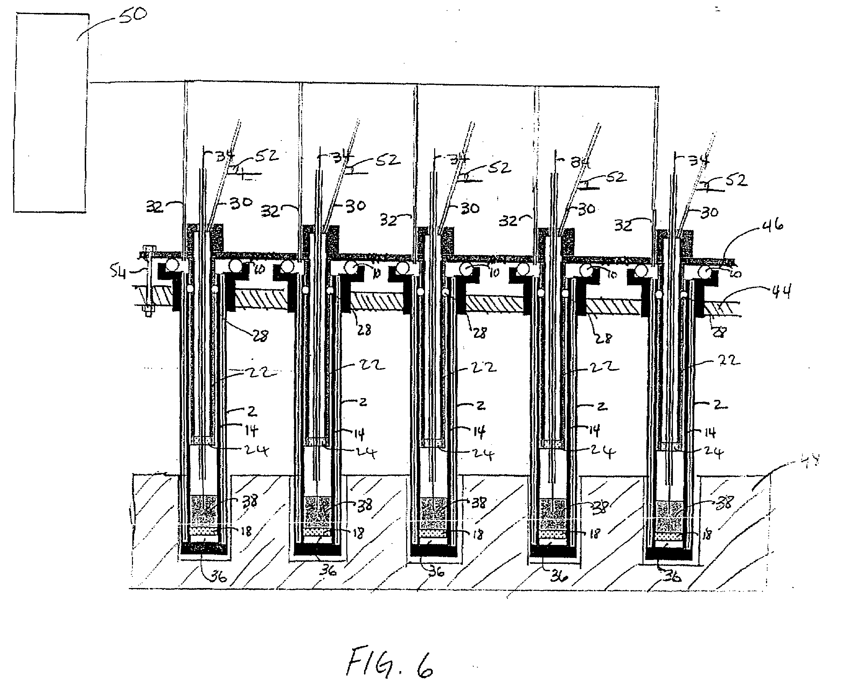

FIG. 1 is an exploded side view of a preferred reactor. FIG. 2 is an end view of the sleeve of the preferred reactor. FIG. 3 is an enlarged view of the bottom end of the sleeve of the preferred reactor. FIG. 4 is an assembled side view of the preferred reactor. FIG. 5 is an exploded side view of a plurality of preferred reactors. FIG. 6 is an assembled side view of a plurality of preferred reactors.

### DETAILED DESCRIPTION OF THE INVENTION

In general terms, the invention is a reactor for use in combinatorial applications and a process for conducting a combinatorial catalyzed reaction. In combinatorial applications, the reactor of the present invention is used as an array of multiple reactors operating simultaneously in parallel. Preferably the reactor consists of three main components, (I) a top, or reactor insert, (II) a vessel or sleeve, and (III) a bottom, or well. Each of the main components may be constructed out of materials suitable to the application contemplated. The materials chosen are selected to withstand the temperatures, pressures and chemical compounds of the particular application. Examples of suitable materials include metals and their alloys, low grade steel, and stainless steels, super-alloys like incolloy, inconel, hastalloy, engineering plastics and high temperature plastics, ceramics such as silicon carbide and silicon nitride, glass, and quartz.

In a preferred arrangement the open end of the bottom has the form of a flanged well. The flange of the open end of the well is used to retain a seal such as an o-ring. The seal engages the reactor insert (discussed in detail below) and operates to form a pressure-tight seal between the well and the reactor insert. Alternate pressure seals may be employed such as VCR, or hoefer fittings, but o-rings are preferred. Optionally, the well may contain a projection extending from the side of the well partially into the interior of the well to properly position and retain the sleeve (discussed below) within the well. The projection is located at the closed end of the well, at a location where the bottom end of the sleeve (discussed below) rests on the projection. The projection may be any of various possibilities of support such as a ledge, lip, or a shelf extending from the side of the well into the interior of the well. It is more preferred, however, that the sleeve be self-supporting within the well as discussed below.

The bottom is preferably cylindrical in shape, but may be of other geometric shapes. For example, the cross-section of the bottom may be in the shape of a square, an ellipse, a rectangle, a polygon, "D"-shaped, segment- or pie-shaped, a chard, a cone or the like. For ease of discussion, the bottom is discussed here as having a cylindrical shape. The bottom has a top end, sides, and a bottom end. The top end is open and the bottom end is permanently closed. The preferred volume of the bottoms ranges from about 0.001 cm³ to about 10 cm³ with two most preferred volumes being 0.1 cm³ and 1 cm³. The preferred size of the bottoms ranges from a length/diameter ratio of about 1 to about 20. It is more preferred that the length/diameter of the bottoms be greater than 4 and ideally 5 or 10. It is preferred that the bottoms be constructed of material that is able to withstand temperatures of from about 10°C to about 1000°C. It is also preferred that the bottoms be constructed of material having good heat transfer properties, and that the material of construction is inert in the reaction being conducted. While it may be preferred, all the bottoms in the plurality need not be identical. The geometry, size, volume, and material of construction may be varied between bottoms within the plurality.

Each of the bottoms is a free-standing unit or independent piece of apparatus, however, significant advantages are achieved through attaching each of the bottoms to a single support. The attachment of all the bottoms to a single support operates to provide the benefits of having all the bottoms maneuverable as a single unit, while maintaining the flexibility of replacing any or all of the individual bottoms as necessary. For example, it is far more convenient for handling and assembly to be able to manipulate a single support as opposed to individually manipulating multiple bottoms. Also, robotics, which are frequently used in combinatorial application, are more readily adapted to manipulating a single tray. Furthermore, as will be discussed in greater detail below, the assembly of the reactors is reduced to a single step which simultaneously seals and forms the multiple parallel reactors.

The support may provide for the attachment of any number of individual bottoms. For example, a support may attach 6, 8, 12, 24, 48, 96, and 384 bottoms. Ease of handling is only one of the benefits of the support, flexibility is another. In any given application, the full capacity of a support need not be utilized, i.e., a support capable of supporting 24 bottoms may be used to support only two bottoms. The system is very flexible in that the number of bottoms in use is easily altered by simply adding or removing bottoms to the support. Similarly, should one bottom of a plurality become worn or damaged, that single bottom may be independently replaced without replacement of other bottoms in the plurality.

As with the bottom itself, the support may be constructed the same of materials and in addition low temperature plastics such as polyethylene, polypropylene, and polyetherether ketone. The support may allow for the attachment of the vessels in any number of geometrical patterns with the preferred being a grid. It is preferred that the support have dimensions similar to the dimensions of commonly used microtiter trays. It is preferred that the support be constructed of material that is able to withstand temperatures of from about 10°C to about 1000°C, and for many catalytic reactions, the support may be required to withstand temperatures ranging from about 300°C to about 1000°C.

The multiple parallel catalytic reactor assembly of the present invention may optionally contain one or more heaters to heat at least a portion of one or more of the bottoms. For many reactions, the catalyst used in the reaction must be heated to a desired temperature range. The multiplicity of bottoms may be heated as a unit, or each bottom may be individually heated. All heated bottoms may be heated to the same temperature, or different individual bottoms may be heated to different temperatures. The portion of the bottom that is heated is usually that portion closest to the location of the catalyst (discussed below), and generally, it is preferred that the closed end of the bottoms be heated.

The multiple parallel catalytic reactors of the present invention further contain a plurality of tops which correspond to the plurality of bottoms. The tops engage the open ends of the bottoms to form sealed reaction chambers. Therefore, for every bottom in the plurality there must be a corresponding top. Like the bottoms, the tops may be constructed of the previously described materials and in addition low temperature plastics such as polyethylene, polypropylene, and polyetherether ketone. The tops may be required to withstand temperatures from 10°C to about 1000°C, but a preferred range of temperatures includes temperatures ranging from about 10°C to about 350°C. It is preferred that each top in the plurality be constructed of the identical material, but it is not necessary. Similarly, in some applications it may be preferred that the plurality of tops be constructed of the same material as the corresponding plurality of bottoms, but again it is not necessary. For example, in the situation where only the closed end of the bottoms are heated, heat resistant material may be used for the construction of the bottoms, where non-heat resistant material may be used for the corresponding tops. It is preferred that the length of the bottoms be sufficient so that the tops are not affected by the heater used at the closed end of the bottoms, thereby allowing lower temperature materials to be used for the construction of the tops.

It is preferred that the overall shape of the tops conform to the shape of the corresponding bottoms so that the tops may adequately engage the bottoms to form sealed reaction chambers. The tops may be formed so as to merely seal the open end of the bottoms, or the top may extend within the open end of the bottoms to further define the reaction chambers. One or more seals are used to engage both the bottoms and the tops to form the sealed reaction chambers. One seal may be used to engage both the plurality of bottoms and the plurality of tops, or each set of a bottom and its corresponding top may have an independent seal. An advantage of the present invention is that seals that function only at lower temperatures may be employed even if the catalyst in the reaction chamber is to be heated to a high temperature. In such a situation, the catalyst is contained near the closed end of the bottoms and only the closed end of the bottoms are heated. The length of the bottoms are preferably chosen so that the position of the seal(s) is a sufficient distance from the heater and the seal(s) are not affected by the heat. It is most preferred that the seals be prevented from exceeding 200°C.

As with the bottoms, each of the tops is a free-standing unit or independent piece of apparatus. Again, however, significant advantages are achieved by attaching each of the tops to a single support. Manual or robotic handling and assembly is simplified by manipulating a single support as opposed to individually manipulating multiple bottoms. Furthermore, as will be discussed in greater detail below, the assembly of the reactors is reduced to a single step which simultaneously seals and forms the multiple parallel reactors.

The support for the tops may provide for the attachment of any number of individual tops. For example, a support may attach 6, 8, 12, 24, 48, 96, 384, and 1264 tops. As with the bottoms, ease of handling is only one of the benefits of the support, and flexibility is another. In any given application, the full capacity of a support need not be utilized, i.e., a support capable of supporting 24 tops may be used to support only two tops. The system is very flexible in that the number of tops in use is easily altered by simply adding or removing one or more top to the support. Similarly, should a top of a plurality become worn or damaged, that single top may be independently replaced without replacement of other tops in the plurality.

The support for the tops may be constructed of a the same materials as the support for the bottom. The support for the tops may be required to withstand temperatures from 10°C to about 1000°C, but a preferred range of temperatures includes temperatures ranging from about 10°C to about 350°C. The support may allow for the attachment of the tops in any number of geometrical patterns with the preferred being a grid arrangement. However, it is important that the arrangement of the tops be such that it allows for each top to properly engage its corresponding bottom to form the sealed reaction chambers. It is therefore preferred that the arrangement of the tops coordinate with the arrangement of the bottoms.

Another component of the present invention is a plurality of vessels to contain the catalyst. Each vessel has an open end and a fluid permeable end. Catalyst is added to the vessels through the open end. The same catalyst may be placed in all the vessels or each individual vessel may contain a different catalyst or mixtures of different catalysts. The same mixture of two or more catalysts may be in each individual reactor, but each at different relative component ratios. The vessel is positioned within the sealed reaction chamber formed by the tops and the bottoms. The open ends of the vessels are in alignment with, or adjacent to, the open ends of the bottoms and the fluid permeable ends of the vessels are oriented to be adjacent the closed ends of the bottoms. One or more seals may be used to engage both the vessels and the corresponding tops to form a catalyst zone. Seals aid in containing the catalyst within the vessels and directing the fluid flow in the proper path for the application. Again, when a heater is employed, it is preferred that the bottoms and vessels be sized so that the seals engaging the tops and the vessels be a sufficient distance from the heater so the seals do not exceed their useful temperature. It is most preferred that the seals be prevented from exceeding 200°C.

The vessels may be in any of the shapes described above for the bottoms, and may be constructed of any of the materials described above for the bottoms or the tops. It is preferred that the vessels be of the same overall shape as the bottoms and constructed of the same material as the bottoms. The fluid permeable end will contain a structure for restricting or excluding catalyst flow such as a microporous containment device, which may be constructed of any material that is capable of retaining solid particles while allowing gas or liquid to pass through. The microporous containment device is attached at or near the fluid permeable end of the vessel and extends across the cross-section, or internal diameter, of the vessel. Examples include frits, membranes, or fine meshed screens. Suitable frits include sintered metal, glass, sintered glass, and raney metals. Suitable membranes include electro-bonded films and etched alloy films. Frits are preferred for the microporous containment device, and it is preferred that the frit cover as much of the cross-section of vessel as possible, and most preferred that the frit cover as close to 100 percent of the cross-section of the vessel as practical. It is most preferred to have a frit with small passages so that the fluid is well dispersed after passing through the frit. The interior volume of space defined by the top, the sides of the vessel, and the microporous containment device at the fluid permeable end of the vessel is a catalyst zone and contains the solid catalyst particles.

As in most catalytic reactions, it is necessary to add at least one reactant to contact the catalyst and to form a reaction mixture. Effluent is then withdrawn, typically for analysis. Therefore, each of the multiple reaction chambers of the present invention is in fluid communication with at least two fluid conduits, one to allow the addition of fluid reactant and the other to allow for the withdrawal of the resulting effluent. Both fluid conduits may be connected to the tops or the support for the tops and in fluid communication with the reaction chambers, In some particular applications it may be preferred that both fluid conduits be connected to the tops or the support for the tops. One benefit to having both fluid conduits connected to the tops or the support for the tops is the simplification of the overall assembly of the apparatus thus the ease of use of the apparatus. As discussed below, assembling the key components may be simplified when the fluid conduits are all positioned on the same side of the apparatus. Furthermore, placement of the apparatus of the invention into other devices may be simplified by having all the fluid conduits on the same side of the apparatus. For example, placing the closed ends of the bottoms of the assembled apparatus into a heater is simplified when all the conduits are located on the same side of the apparatus.

The fluid conduits for the inlet of the reactant are positioned so that the fluid flow of the reactant enters the reaction chambers and passes through the fluid permeable end of the vessel to enter the catalyst zone and contact the catalyst. The fluid conduits for the withdrawal of the effluents are positioned so that the effluents are withdrawn from the catalyst zones without disrupting the flow of reactants. The seals also help to control the fluid flow in the proper direction.

The fluid conduits may further contain a structure to prevent solid catalyst particles from being removed with the effluent. Where the fluid flows into the vessel through the fluid permeable end of the vessel an additional fluid permeable structure that restricts or excludes catalyst flow may be located anywhere downstream of the catalyst to prevent its removal with the effluent. The additional fluid permeable structure may be a microporous structure located within the vessel or anywhere along the effluent flow path including the inlet to one of the conduits.

In heterogeneous catalytic applications, it is necessary to be able to open reactors in order to add or remove solid catalyst particles within the vessels. Note that the catalyst particles may be removed, or, for added convenience, it is preferred that the entire vessel containing the catalyst be removed and replaced with another vessel containing another catalyst to be evaluated. The multiple parallel catalytic reactor assembly of the present invention provides a significant advantage in that the assembly may be opened and closed with ease. With all the bottoms attached to a single support and all the tops also attached to a single top support, the two halves may be readily closed in a single step to form the multiple sealed reaction chambers. It is not necessary to close each reactor individually, sequentially, one by one. All reactors are closed simultaneously by placing the top support containing all the tops in alignment over the corresponding bottom support containing all the bottoms. While the reactors are closed and sealed, the fluid conduits in fluid communication with the reaction chambers provide the conduits for the introduction of reactant into the reaction chambers and the withdrawal of effluent from the reaction chambers without opening the reactors. Repeated opening and closing of the reactors to introduce reactants and remove products are not necessary. The reactor may remain closed until solid catalyst particles need to be added or removed. When the reactors need to be opened to add or remove solid catalyst particles, all the reactors are opened simultaneously in a single step by removing the top support containing all the tops from alignment over the corresponding bottom support containing all the bottoms.

The fit of the tops into the open end of the bottoms may provide enough of a seal to maintain the sealed reaction chambers. However, if necessary, the tops may be held in place over the bottoms by a locking device. Numerous locking devices are known in the art for holding two supports together. For example, clamps, bolts, frames, and springs are all known locking devices that may be successfully employed in the present invention.

An optional component in the present invention is a plurality of thermocouples. The plurality of thermocouples extends into the reaction chamber in order to measure the temperature of the solid catalyst particles. It is preferred that the thermocouples extend through the fluid conduit that is in more direct fluid communication with the catalyst zone and into the catalyst zone.

The top has the form of a reactor insert which is inserted into a sleeve form of the vessel which in turn is inserted into the well. In the assembled reactor, the sleeve is positioned between the reactor insert and the well.

The sleeve form of the vessel has a top end, sides, and a bottom end. The top and bottom ends of the sleeve are open. The microporous containment device, is attached at or near the bottom end of the sleeve and extends across the cross-section, or internal diameter, of the sleeve. The interior volume of space defined by the top of the sleeve, sides of the sleeve, and the microporous containment device attached to the sleeve is a reaction zone and contains solid catalyst particles.

The external diameter of the sleeve is less than the internal diameter of the well so that the sleeve may be inserted into the well. In one embodiment of the invention, the length of the sleeve may be less than the length of the well so that a chamber is formed between the bottom end of the sleeve and the bottom end of the well. It is preferred that the length of the sleeve be from 70% to 95% of the length of the well. In another more preferred embodiment of the invention, the sleeve extends the entire length of the well with the bottom end of the sleeve resting on the bottom of the well. In this embodiment, the microporous containment device is located near but not at the bottom end of the sleeve. Furthermore, in this embodiment, the sides of the sleeve at the bottom end of the sleeve have portions removed so that as the bottom end of the sleeve rests on the bottom end of well, channels are formed through which fluid is able to flow. For example, the bottom end of the sleeve may have ridges, or may be scalloped or grooved.

The sleeve and the well are sized so that with the sleeve inserted into the well, the external surface of the sleeve and the internal surface of the well form channels through which a fluid is able to flow. It is preferred that either the external surface of the sleeve or the internal surface of the well, or both, define grooves that upon insertion of the sleeve into the well form the channels. The grooves may run parallel to the length of the sleeve, may follow the circumference of the sleeve in a spiral pattern, or may form a wave pattern. The channels formed by the grooves provide a path for fluid to flow from one end of the sleeve to the other.

The sleeve is preferably sized, and the grooves formed, so that a portion of the external surface of the sleeve remains in contact with the internal surface of the well. Such contact provides for good heat transfer from the well to the sleeve. Many reactions require heat, and good heat transfer from the well to the sleeve provides a mode for heating the reaction zone defined by the sleeve and the catalyst within the reaction zone. It is generally desirable to preheat the reactant prior to introduction to the reaction zone, and good heat transfer between the well and the sleeve provides for an opportunity to preheat the reactant as it passes with the fluid flow through the channels. The pattern chosen for the grooves may vary depending upon the degree of preheating needed for the reactant and the particular reaction involved.

A reactor insert is inserted into the sleeve. The reactor insert form at the top also has an outer end, sides, and a bottom end or sidewalls containing a fluid permeable portion. The external diameter of the reactor insert is less than the internal diameter of the sleeve so that the reactor insert may be inserted into the sleeve. The length of the reactor insert is less than the length of the sleeve measured from the top of the sleeve to the fluid permeable structure attached to the sleeve, so that a reaction zone is formed between the bottom end of the reactor insert and the fluid permeable structure attached to the sleeve. Solid catalyst particles are retained within the reaction zone. It is preferred that the length of the reactor insert be from 5% to 70% of the length of the sleeve measured from the top of the sleeve to the fluid permeable structure attached to the sleeve.

As stated above, the bottom end or the sides of the reactor insert contains at least a portion that is permeable to fluid. The portion permeable to fluid may be any material that is capable of excluding solid particles while allowing gas or liquid to pass through. Examples include frits or membranes as discussed above for the sleeve. Frits are preferred for the permeable portion of the bottom of the reactor insert, and it is preferred that the frit cover from 20 to greater than 90 percent of the bottom of the reactor insert with the most preferred being greater than 90 percent of the bottom of the reactor insert. The interior of the reactor insert forms a passage to allow fluid to flow from one end of the reactor insert to the other. For example, the fluid that permeates through the permeable portion of the bottom end of the reactor insert may pass to the top end of the reactor insert and exit the reactor via the fluid conduit at the top end of the reactor insert. Catalyst particles are unable to pass through the permeable portion of the bottom end of the reactor insert and are therefore retained within the reaction zone.

It is preferred that the top end of the reactor insert be flanged. The flanged portion of the reactor insert would engage the o-ring seal retained by the flange of the well to form a pressure-tight seal between the reactor insert and the well via the o-ring. The reactor insert is further equipped with a seal to engage the sleeve and form a pressure-tight seal between the reactor insert and the sleeve.

Optionally, the reactor insert may be equipped with a thermocouple. The thermocouple may extend from the top of the reactor insert, through the interior passage of the reactor insert, and through the bottom of the reactor insert to extend into the reaction zone. The thermocouple provides accurate measurements of the temperature at which a reaction in the reaction zone is occurring. It is preferred that the thermocouple be housed within a guide tube that also extends from the top of the reactor insert, through the interior passage of the reactor insert, and through the bottom of the reactor insert into the reaction zone. The guide tube, which is open at both a top end and a bottom end, allows for easy insertion or removal of the thermocouple.

One fluid conduit is typically located at the top end of the reactor insert. A preferred location for the second fluid conduit is for the conduit to pass through the flange of the reactor insert and conduct fluid into a volume of space between the flange of the reactor insert and the flange of the well. Alternatively, the second fluid conduit may pass through the side of the well and provide a passage for fluid to flow into or out of the channels formed by the sleeve and the well. In a specific embodiment of the invention either the first or the second fluid conduit is in fluid communication with a reactant reservoir. Similarly, the fluid conduit that is not in fluid communication with a reactant reservoir may be in fluid communication with a sampling device that is used to sample the effluent exiting the reactor.

The preferred reactor described above is successfully used in combinatorial applications. It is preferred that the multiple wells of a number of reactors are attached to a single support such as a rack or tray (described above). The multiple reactor inserts are also preferably attached to a single support such as a top plate. For combinatorial applications, a single top plate is engaged with a single rack containing multiple wells to form a multiple of individual reactors. It is preferred to have the sleeves be individually movable however. The reactor sleeves may be used in the synthesis of different catalysts, and the sleeves, still containing the catalysts, are inserted into the wells as described above. The advantage would be the elimination of a catalyst transfer step since the catalyst would remain in the sleeve from the time of synthesis through the testing process. It is preferred to have the same reactant reservoir in fluid communication with each of the multiple reactors.

Referring to FIG. 1, an exploded side view of the reactor of the invention, well **2**, has a closed end **4** and an open end **6**. Open end **6** contains a flange **8** which retains o-ring **10**. Sleeve **14** has open end **16** and bottom end **12**. Near the bottom end **12** is frit **18.** The walls of sleeve **14** have material removed to form grooves **20** as shown in FIG. 2, an end view of sleeve **14**. The bottom end **12** of sleeve **14** has material removed to form ridges **13**, as shown in FIG. 3, and external side view of bottom end **12** of sleeve **14**. Reactor insert **22** has fluid permeable end **24** in fluid communication with fluid conduit **30** via hollow center **40**. Reactor insert **22** has flanged end **26,** fluid conduit **32,** and o-ring **28**. Thermocouple **34** extends through guide tube **42** which in turn extends through reactor insert **22** and beyond fluid permeable end **24** of reactor insert **22**. Referring to FIG. 4, bottom end **12** of sleeve **14** is inserted into open end **6** of well **2** with bottom end **12** of sleeve **14** resting on closed end **4** of well **2**. Fluid permeable end **24** of reactor insert **22** is inserted into open end **16** of sleeve **14.** A reaction zone **38** is formed between the fluid permeable end **24** of reactor insert **22** and the frit **18** of sleeve **14**. Catalyst is retained in reaction zone **38**. Chamber **36** is formed by closed end **4** of well **2** and frit **18** of sleeve **14**. Flange end **26** of reactor insert **22** engages o-ring **10** retained by flange **8** of well **2** to form a pressure tight seal. O-ring **28** of reactor insert **22** engages sleeve **14** to form a pressure tight seal.

Fluid enters the reactor via conduit **32**. Grooves **20** of sleeve **14** together with well **2** form passages allowing fluid from conduit **32** to flow through grooves **20** and grooves **13** to chamber **36** formed by closed end **4** of well **2** and frit **18** of sleeve **14.** Fluid passes through fluid permeable frit **18** of sleeve **14** and enters reaction zone **38** to contact the catalyst. The fluid flow may be at a rate to result in a fluidized bed of catalyst or fixed bed of catalyst, whichever is required for the specific application. Thermocouple **34** is used to accurately measure the temperature of reaction zone **38**. After contacting the catalyst in reaction zone **38**, the fluid passes through fluid permeable end **24** of reactor insert **22,** through hollow center **40,** and is removed from the reactor via fluid conduit **30**.

Alternatively, fluid may be introduced to the reactor via fluid conduit **30**. The fluid passes through hollow center **40** of reactor insert **22** and through fluid permeable end **24** of reactor insert **22** into reaction zone **38**. With the fluid flowing in this direction, it is preferred that the flow rate be such that the catalyst remains as a fixed bed. After contacting the catalyst in reaction zone **38**, the fluid passes through frit **18** of sleeve **14** and into chamber **36.** The fluid then flows through passages formed by grooves **20** and **13** of sleeve **14** together with well **2** to the open flanged end **6** of well **2**. The fluid exits the reactor via fluid conduit **32.**

Turning now to FIG. 5 which is an exploded side view of an array of reactors having wells **2** sleeves **14** and reactor inserts **22.** The wells **2** are as described above including retaining o-rings **10**. However, the multiple wells **2** are attached to a support **44.** The sleeves **14** are as described above, including the attachment of frits **18**. Reactor inserts **22** are as described above including having fluid permeable ends **24** in fluid communication with fluid conduits **30,** thermocouples **34** extending through guide tubes **42**, fluid conduits **32**, and o-rings **28.** Reactor inserts **22** are attached to a top plate **46**.

Referring to FIG. 6, sleeves **14** are inserted into wells **2**. Fluid permeable ends **24** of reactor inserts **22** are inserted into sleeves **14.** Reaction zones **38** are formed between the fluid permeable ends **24** of reactor inserts **22** and the frits **18** of sleeves **14**. Catalyst is retained in reaction zones **38.** Chambers **36** are formed by wells **2** and frits **18** of sleeves **14.** Reactor inserts **22** engage o-rings **10** retained by wells **2** to form a pressure tight seal. O-rings **28** of reactor inserts **22** engage sleeves **14** to form a pressure tight seal. Heater **48** is positioned adjacent wells **2** and reaction zones **38**. Fluid conduits **32** are connected to solvent reservoir **50**, and fluid conduits **30** are equipped with sampling devices **52.** In an alternate embodiment, Fluid conduits **30** may be connected to a solvent reservoir, and fluid conduits **32** be equipped with sampling devices. An optional bolt **54** is used as a locking member to secure the top and bottom supports.

## Claims

1. A multiple parallel catalytic reactor assembly comprising:
a) a plurality of bottoms (2), each bottom having a closed end (4) and an open end (6), said plurality of bottoms supported by a single first support,
b) a plurality of tops (22) supported by a single second support, said plurality of tops (22) cooperating with said open ends (6) of the plurality of bottoms (2) to form a plurality of independent reaction chambers (38);
c) a plurality of vessels (14) for retaining catalyst, each vessel having a fluid permeable end (18) that restricts catalyst flow and an open end (16), with the fluid permeable end of each of said vessels adopted to extend into said independent reaction chambers (38) through said said open end (6) of said bottoms (2) and;
wherein the fluid permeable ends contain a microporous containment device attached at or near the fluid permeable end of the vessel and extends across the cross-section of the sleeve;
d) a plurality of first fluid conduits (30) (32) in fluid communication with the plurality of reaction chambers (38); wherein each of said first fluid conduits is in fluid communication with a reactant reservoir;
e) a plurality of second fluid conduits (30) (32) in fluid communication with the plurality of reaction chambers (38) wherein each of said second fluid conduits is in fluid communication with a sampling device;
and wherein both the first and second fluid conduits are connected to the tops;
the apparatus further comprising a plurality of seals (10), each seal engaging a bottom (2) and a corresponding top (22) to form the sealed independent reaction chambers (38) and comprising one or more seals (28) engaging the vessels (14) and the corresponding tops (22) or bottoms (2);
and wherein each top is in the form of a reactor insert, each vessel is in sleeve form and the sleeve has a top end, a bottom end, and a cross-section; and each bottom is in the form of a well; and each reactor insert is inserted into a sleeve, which in turn is inserted into a well, and in the assembled reactor, the sleeve is positioned between the reactor insert and the well.

2. The multiple parallel catalytic reactor assembly of Claim 1 further comprising a locking device engaging both the first support and the second support.

3. The multiple parallel catalytic reactor assembly of Claim 1 wherein the reactor insert is equipped with a thermocouple (34).

4. A process for conducting multiple parallel catalytic reactions using the apparatus of any of Claims 1-3 comprising:
a) sealing, simultaneously, the open ends (6) of the plurality of bottoms (2) with a plurality of corresponding tops (22) supported by a single second support to form multiple sealed independent reaction chambers each multiple sealed independent reaction chamber housing the vessel (14) containing catalyst;
b) introducing, simultaneously, a reactant fluid to each sealed independent reaction chamber to contact the catalysts contained therein and to form a plurality of reaction mixtures, one reaction mixture in each sealed independent reaction chamber; and
c) withdrawing, simultaneously, an effluent from each independent reaction chamber.

## Patentansprüche

1. Anordnung aus mehreren parallelen katalytischen Reaktoren, die enthält:
a) mehrere Unterseiten (2), wobei jede Unterseite ein geschlossenes Ende (4) und ein offenes Ende (6) besitzt, wobei die mehreren Unterseiten durch einen einzigen ersten Träger unterstützt sind,
b) mehrere Oberseiten (22), die durch einen einzigen zweiten Träger unterstützt sind, wobei die mehreren Oberseiten (22) mit den offenen Enden (6) der mehreren Unterseiten (2) zusammenwirken, um mehrere unabhängige Reaktionskammern (38) zu bilden;
c) mehrere Gefäße (14), um einen Katalysator zu halten, wobei jedes Gefäß ein für Fluid permeables Ende (18), das eine Katalysatorströmung beschränkt, und ein offenes Ende (16) besitzt, wobei das für Fluid permeable Ende jedes der Gefäße dazu ausgelegt ist, sich durch das offene Ende (6) der Unterseiten (2) in die unabhängigen Reaktionskammern (38) zu erstrecken; und
wobei die für Fluid permeablen Enden eine mikroporöse Aufnahmevorrichtung enthalten, die bei dem oder nahe bei dem für Fluid permeablen Ende des Gefäßes befestigt ist und sich über den Querschnitt der Hülse erstreckt;
d) mehrere erste Fluidleitungen (30) (32), die mit den mehreren Reaktionskammern (38) in einer Fluidkommunikation stehen;
wobei jede der ersten Fluidleitungen mit einem Reaktand-Vorratsbehälter in einer Fluidkommunikation steht;
e) mehrere zweite Fluidleitungen (30) (32), die mit den mehreren Reaktionskammern (38) in einer Fluidkommunikation stehen,
wobei jede der zweiten Fluidleitungen mit einer Probennahmevorrichtung in einer Fluidkommunikation steht;
und wobei sowohl die ersten als auch die zweiten Fluidleitungen mit den Oberseiten verbunden sind;
wobei die Vorrichtung ferner mehrere Dichtungen (10) aufweist, wobei jede Dichtung mit einer Unterseite (2) und einer entsprechenden Oberseite (22) in Eingriff ist, um die abgedichteten unabhängigen Reaktionskammern (38) zu bilden, und eine oder mehrere Dichtungen (28) aufweist, die mit den Gefäßen (14) und den entsprechenden Oberseiten (22) oder Unterseiten (2) in Eingriff sind;
und wobei jede Oberseite die Form eines Reaktoreinsatzes hat, wobei jedes Gefäß eine Hülsenform hat und die Hülse ein oberes Ende, ein unteres Ende und einen Querschnitt besitzt; und wobei jede Unterseite die Form einer Wanne hat; und jeder Reaktoreinsatz in eine Hülse eingesetzt ist, die ihrerseits in eine Wanne eingesetzt ist, und wobei in dem zusammengesetzten Reaktor die Hülse zwischen dem Reaktoreinsatz und der Wanne positioniert ist.

2. Anordnung aus mehreren parallelen katalytischen Reaktoren nach Anspruch 1, die ferner eine Verriegelungsvorrichtung enthält, die sowohl mit dem ersten Träger als auch mit dem zweiten Träger in Eingriff ist.

3. Anordnung aus mehreren parallelen katalytischen Reaktoren nach Anspruch 1, wobei der Reaktoreinsatz mit einem Thermoelement (34) ausgerüstet ist.

4. Prozess für die Ausführung mehrerer paralleler katalytischer Reaktionen unter Verwendung der Vorrichtung nach einem der Ansprüche 1-3, der enthält:
a) gleichzeitiges Abdichten der offenen Enden (6) der mehreren Unterseiten (2) mit mehreren entsprechenden Oberseiten (22), die durch einen einzigen zweiten Träger unterstützt sind, um mehrere abgedichtete unabhängige Reaktionskammern zu bilden, wobei jede der mehreren abgedichteten unabhängigen Reaktionskammern das Gefäß (14) aufnimmt, das einen Katalysator enthält;
b) gleichzeitiges Einleiten eines Reaktandfluids in jede abgedichtete unabhängige Reaktionskammer, um mit den darin enthaltenen Katalysatoren in Kontakt zu gelangen und um mehrere Reaktionsgemische zu bilden, d. h. ein Reaktionsgemisch in jeder abgedichteten unabhängigen Reaktionskammer; und
c) gleichzeitiges Entnehmen eines Ausflusses aus jeder unabhängigen Reaktionskammer.

## Revendications

1. Ensemble de réacteurs catalytiques parallèles multiples, comprenant:
a) une pluralité de fonds (2), chaque fond présentant une extrémité fermée (4) et une extrémité ouverte (6), ladite pluralité de fonds étant supportée par un seul premier support,
b) une pluralité de sommets (22) supportés par un seul deuxième support, ladite pluralité de sommets (22) coopérant avec lesdites extrémités ouvertes (6) de la pluralité de fonds (2) pour former une pluralité de chambres de réaction indépendantes (38);
c) une pluralité de cuves (14) pour contenir un catalyseur, chaque cuve présentant une extrémité perméable au fluide (18) qui limite un écoulement du catalyseur, et une extrémité ouverte (16), dans lequel l'extrémité perméable au fluide de chacune desdites cuves est adaptée pour s'étendre dans lesdites chambres de réaction indépendantes (38) à travers ladite extrémité ouverte (6) desdits fonds (2); et
dans lequel les extrémités perméables au fluide contiennent un dispositif de confinement micro-poreux qui est attaché à ou à proximité de l'extrémité perméable au fluide de la cuve et qui s'étend en travers de la section transversale du manchon;
d) une pluralité de premiers conduits de fluide (30), (32) en communication fluidique avec la pluralité de chambres de réaction (38), dans lequel chacun desdits premiers conduits de fluide est en communication fluidique avec un réservoir de réactif;
e) une pluralité de deuxièmes conduits de fluide (30), (32) en communication fluidique avec la pluralité de chambres de réaction (38), dans lequel chacun desdits deuxièmes conduits de fluide est en communication fluidique avec un dispositif d'échantillonnage;
et dans lequel les premiers et deuxièmes conduits de fluide sont tous les deux connectés aux sommets;
le dispositif comprenant en outre une pluralité de joints (10), chaque joint engageant un fond (2) et un sommet correspondant (22) pour former les chambres de réaction indépendantes isolées (38), et comprenant un ou plusieurs joint(s) (28) qui engage(nt) les cuves (14) et les sommets (22) ou les fonds (2) correspondants;
et dans lequel chaque sommet se présente sous la forme d'un insert de réacteur, chaque cuve se présente sous la forme d'un manchon et le manchon présente une extrémité supérieure, une extrémité inférieure et une section transversale; et chaque fond se présente sous la forme d'un puits; et chaque insert de réacteur est inséré dans un manchon, qui est à son tour inséré dans un puits, et dans le réacteur assemblé, le manchon est positionné entre l'insert de réacteur et le puits.

2. Ensemble de réacteurs catalytiques parallèles multiples selon la revendication 1, comprenant en outre un dispositif de verrouillage qui engage à la fois le premier support et le deuxième support.

3. Ensemble de réacteurs catalytiques parallèles multiples selon la revendication 1, dans lequel l'insert de réacteur est équipé d'un thermocouple (34).

4. Procédé pour réaliser de multiples réactions catalytiques parallèles en utilisant le dispositif selon l'une quelconque des revendications 1 à 3, comprenant les étapes suivantes:
a) fermer simultanément les extrémités ouvertes (6) de la pluralité de fonds (2) avec une pluralité de sommets correspondants (22) supportés par un seul deuxième support de manière à former de multiples chambres de réaction indépendantes isolées, chaque chambre de réaction indépendante isolée contenant la cuve (14) contenant un catalyseur;
b) introduire simultanément un fluide réactif dans chaque chambre de réaction indépendante isolée afin de le mettre en contact avec les catalyseurs contenus dans celles-ci et de former une pluralité de mélanges de réaction, un mélange de réaction dans chaque chambre de réaction indépendante isolée; et
c) prélever simultanément un effluent dans chaque chambre de réaction indépendante.
